# EUROPEAN PATENT APPLICATION

(11) **EP 1 696 297 A2**
(43) Date of publication of application: **30.08.2006**
(21) Application number: 06290153.3
(22) Date of filing: 25.01.2006
(51) Int. Cl.: G05D 1/02

(54) **Robot cleaner and method of control thereof**

(30) Priority: 25.02.2005 KR 2005015775
(71) Applicant: Samsung Gwangju Electronics Co., Ltd., Gwangju-city (KR)
(72) Inventor: Song, Jeong-gon, Gwangsan-gu Gwangju-city (KR); Kim, Ki-man, Gwangansan-gu Gwangju-city (KR); Lee, Ju-sang, Gwangsan-gu Gwangju-city (KR); Ko, Jang-youn, Gwangsan-gu Gwangju-city (KR); Jeung, Sam-jong, Gwangsan-su Gwangju-city (KR); Lim, Kwang-soo, Geumcheon-gu Seoul (KR)
(74) Representative: Blot, Philippe Robert Emile

(57) **Abstract**

A robot vacuum cleaner (100) that comprises a driving unit (150) moving a body (101) on a cleaning surface; a cleaning area detecting unit (310) detecting an area of the cleaning surface; and a central processing unit (330) calculating a spiral cleaning travel pattern corresponding to a shape of each cleaning area based on the information detected by the cleaning area detecting unit to output a cleaning travel signal corresponding the calculated cleaning travel pattern to the driving unit. The cleaning travel pattern can be variable applied depending on a shape of each cleaning area such that the coverage ratio of the cleaning area can increase.

## Description

### CROSS-REFERENCE TO RELATED APPLICATIONS

This application claims priority under 35 U.S.C. § 119 to Korean Patent Application No. 2005-15775, filed on February 25, 2005, in the Korean Intellectual Property Office, the disclosure of which is incorporated herein by reference in its entirety. This application may be related to commonly owned U.S. Patent Application Serial No. 11/288,090, filed on November 29, 2005 claiming priority to Korean Patent Application No. 2005-15468 (116511-00180), filed February 24, 2005, and commonly owned U.S. Patent Application Serial No. 10/804,077, filed March 19, 2004, the subject matter of each of which is herein incorporated by reference.

### FIELD OF THE INVENTION

The present invention relates to a robot cleaner and a controlling method thereof. More particularly, the present invention relates to a robot cleaner, its cleaning travel pattern, that is preferably rectangular-spiral and variable depending on the shapes of the cleaning surfaces, and a controlling method thereof.

### BACKGROUND OF THE INVENTION

Recently, a market for domestic robots, including various types of robot cleaners, has formed and is growing. It is important for robot cleaners to be able to sufficiently clean an entire area without leaving any areas uncleaned. That requires the robot cleaner to recognize any uncleaned areas and clean those areas.

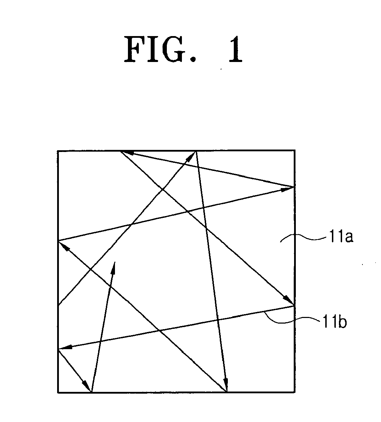

Conventional cleaning methods of robot cleaners are typically either a random sweeping method or a pattern sweeping method. FIG. 1 shows an example of a conventional random cleaning method. Referring to FIG. 1, reference numeral 11a indicates a cleaning area, and reference numeral 11b indicates a random cleaning pattern. For the random cleaning method, a cleaner maneuvers in a cleaning area without any rules for performing the cleaning. The pattern is analogous to a rotating ball colliding with a wall and springing out in a V shape. The random cleaning method can result in a number of areas remaining uncleaned.

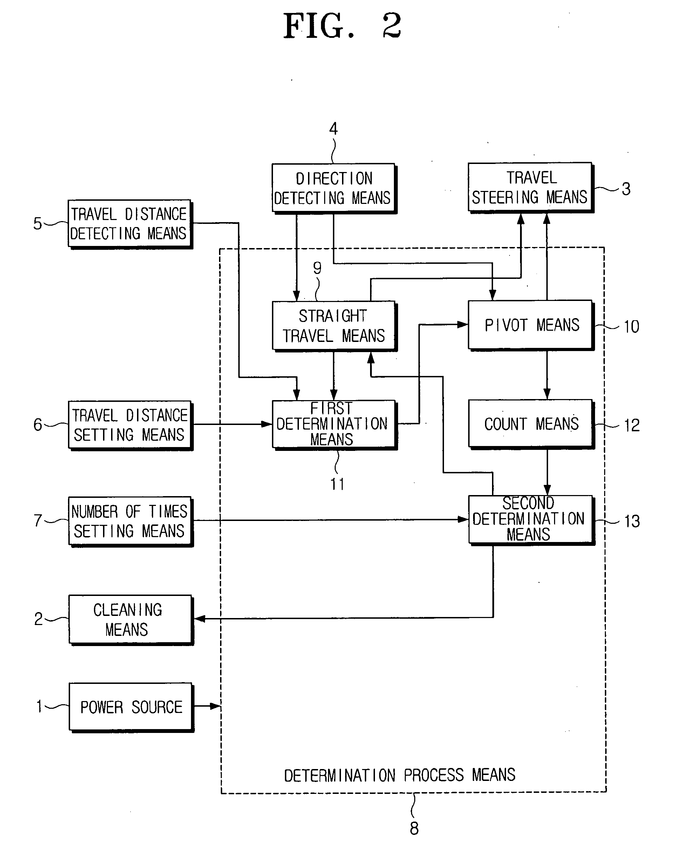

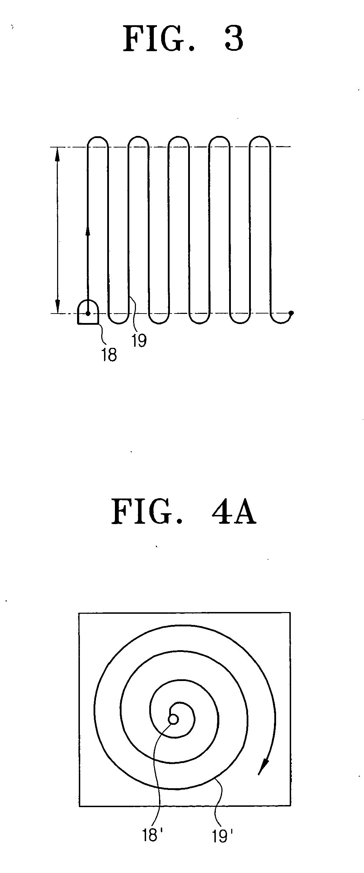

FIG. 2 is an example of a conventional cleaning method, as disclosed in Japanese No. H5-161577, laid-open on June 29, H5 (1993), and entitled Robot Cleaner. FIG. 3 is a view of a cleaning trace pattern performed by the construction of FIG. 2.

Referring to FIGS. 2 and 3, a robot cleaner comprises a travel steering means 3 moving a cleaning body; a travel distance detecting means 5; a direction detecting means 4 detecting direction of the body; a determination process means 8 receiving signals from the travel distance detecting means 5 and the direction detecting means 4 to output a travel signal to the travel steering means 3; a cleaning means 2; a power source 1; a travel distance setting means 6; and a number of U-turns setting means 7. The robot cleaner travels straight by use of the direction detecting means 4 and the travel steering means 3, makes U-turns by use of the direction detecting means 4 and the travel steering means 3, and determines whether the number of U-turns and the straight travel distance reach certain values to perform cleaning. In FIG. 3, the reference numeral 18 depicts a robot cleaner body, and the reference numeral 19 depicts a travel pattern. As seen in FIG. 3, the robot cleaner travels in a simple stripe travel pattern, which often fails to efficiently cover the cleaning area.

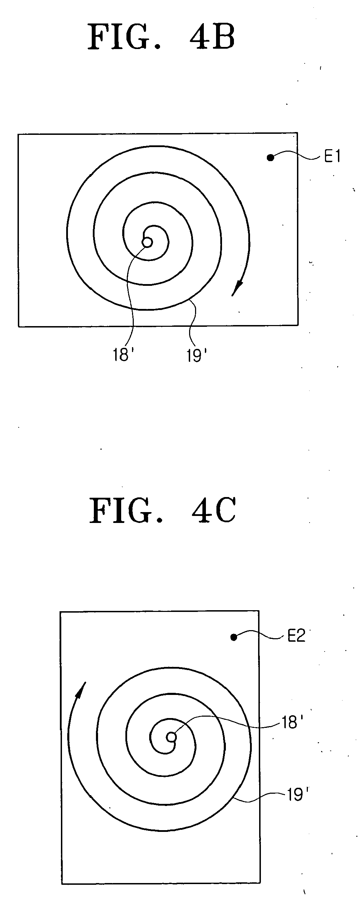

FIGS. 4A to 4C are views of a conventional concentric-spiral cleaning travel pattern. Referring to FIGS. 4A to 4C, the reference numeral 18' depicts a robot cleaner body, the reference numeral 19' depicts a concentric-spiral cleaning travel pattern, and E1 and E2 depict uncleaned areas. The cleaning travel pattern 19' forms concentric circles such that only areas having the same diameter as the circles can be covered. Accordingly, uncleaned areas E1 and E2 remain particularly when the cleaning area is rectangular, as seen in FIGS. 4B and 4C.

### SUMMARY OF THE INVENTION

Accordingly, a first aspect of the present invention is to provide a robot vacuum cleaner which has a rectangular-spiral cleaning travel pattern and variably applies the cleaning travel pattern to cover the entire cleaning area.

A second aspect of the present invention is to provide a controlling method of the aforementioned robot cleaner which has a rectangular-spiral travel pattern.

In order to achieve the first aspect, there is provided a robot vacuum cleaner, comprising: a driving unit moving a body on a cleaning surface; a cleaning area detecting unit detecting an area of the cleaning surface; and a central processing unit calculating a spiral cleaning travel pattern corresponding to the shape of each cleaning area based on information from the cleaning area detecting area and outputting a cleaning travel signal to the driving unit. The cleaning travel pattern may comprise a rectangular-spiral, and the rectangle may comprise an oblong or a square.

The central processing unit may comprise a determination unit receiving a detecting signal from the cleaning area detecting unit to determine a cleaning area; and a cleaning travel signal processing unit calculating a cleaning travel pattern corresponding to the cleaning area determined by the determination unit and outputting a cleaning travel signal corresponding to the cleaning travel pattern to the driving unit. The detecting of the cleaning area can be performed while cleaning or when starting the cleaning.

To achieve the second aspect, there is provided a method of controlling the robot vacuum cleaner comprising the steps of detecting a cleaning area; calculating a spiral cleaning travel pattern corresponding to the detected cleaning area; and outputting the calculated cleaning travel pattern signal to perform the cleaning. The method may further comprise the step of performing an initial cleaning before the detecting the cleaning area. The cleaning travel pattern can be a rectangular-spiral, and the rectangle comprises can be oblong or a square.

A robot cleaner applied according to an embodiment of the present invention as described above produces a cleaning travel pattern that is preferably rectangular-spiral and a cleaning travel pattern that is variably applied corresponding to the cleaning area, thereby increasing the cleaning efficiency.

### BRIEF DESCRIPTION OF THE DRAWINGS

The above and other aspects, features and advantages of the present invention will be more apparent from the following detailed description taken with reference to the accompanying drawings, in which:

FIG. 1 is a diagrammatic view of a conventional random cleaning method pattern;

FIG. 2 is a flowchart of a conventional cleaning method;

FIG. 3 is a diagrammatic view of a cleaning travel pattern performed by the method of FIG. 2;

FIGS. 4A to 4C are diagrammatic views of conventional concentric-spiral cleaning travel patterns;

FIG. 5 is a schematic view of a robot cleaner according to an embodiment of the present invention;

FIG. 6 is a block diagram of the robot cleaner illustrated in FIG. 5;

FIG. 7 is a flowchart of a cleaning operation of the robot cleaner illustrated in FIG. 5;

FIG. 8 is a flowchart of a control method of a robot cleaner according to another embodiment of the present invention; and

FIGS. 9A to 9C are diagrammatic views of examples of cleaning areas applying the cleaning travel pattern according to an embodiment of the present invention.

### DETAILED DESCRIPTION OF THE EXEMPLARY EMBODIMENTS

Certain embodiments of the present invention will be described in greater detail with reference to the accompanying drawings.

In the following description, the same drawing reference numerals are used for the same elements. The matters defined in the description, such as a detailed construction and elements, are only provided to assist in a comprehensive understanding of the invention. Thus, it is apparent that the present invention can be carried out without those defined matters. Also, well-known functions or constructions are not described in detail because they would obscure the invention in unnecessary detail.

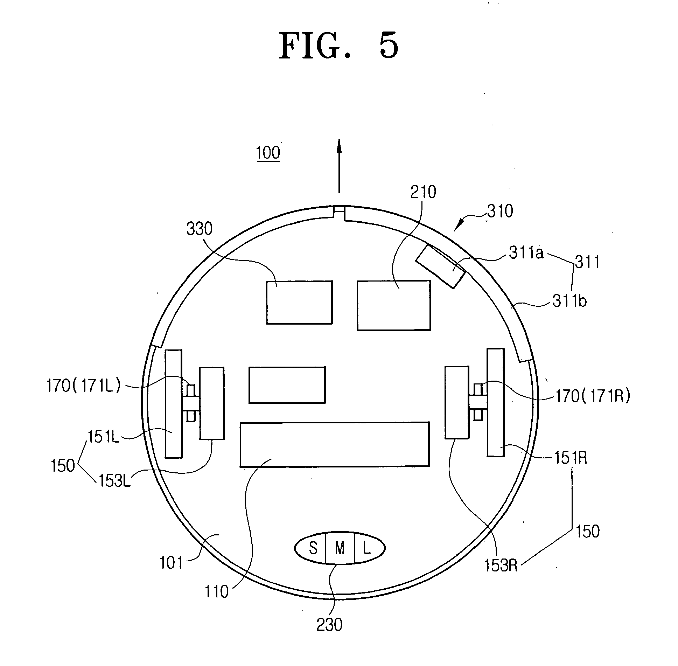

Referring to FIG. 5, a robot cleaner 100 comprises a body 101, a cleaning unit 110, a cleaning area detecting unit 310, a driving unit 150, a travel distance detecting unit 170, a central processing unit 330, a battery 210, and a manipulation unit 230.

The body 101 may be configured as a cylinder, and includes the cleaning unit 110 for collecting dust or contaminants from a cleaning surface. The cleaning unit 110 may consist of, for example, a suction brush 115 and a suction pipe for drawing in dust (not shown) or contaminants from the cleaning surface, a suction motor 113 for generating a suction force, and a dust chamber (not shown) for collecting the drawn in dust and contaminants.

The cleaning area detecting unit 310 is mounted to a front side of the body 101 to detect a cleaning area by sensing an obstacle, such as a wall. The cleaning area detecting unit 310 comprises a cleaning area detecting sensor 311 for detecting the cleaning area. The cleaning area detecting sensor 311 may be, for example, a light sensor 311 a in which an element emitting infrared rays and a light receiving element receiving reflected light are paired. The cleaning area detecting sensor 311 may be an ultrasonic wave sensor (not shown) which is capable of emitting ultrasonic waves and receiving reflected ultrasonic waves. Alternatively, the cleaning area detecting sensor 311 may be a bump sensor 311b disposed along an outer circumference of the front side of the body 101 for sensing an obstacle. The bump sensor 311b activates a tact switch in the bumper which senses an obstacle when the bumper collides with the obstacle while traveling.

The driving unit 150 for controlling the wheels of the robot cleaner 100 is mounted to the body 101. The driving unit 150 comprises a left wheel motor 153L and a right wheel motor 153R controlling a left wheel 151L and a right wheel 151R, respectively. The driving unit 150 receives a signal from the central processing unit 330 to change the direction of the left wheel 151L and the right wheel 151R while moving along the cleaning travel pattern. The travel distance detecting unit 170 comprises a left wheel encoder 171 L and a right wheel encoder 171 R for sensing the status of each of the left wheel motor 153L and the right wheel motor 153R.

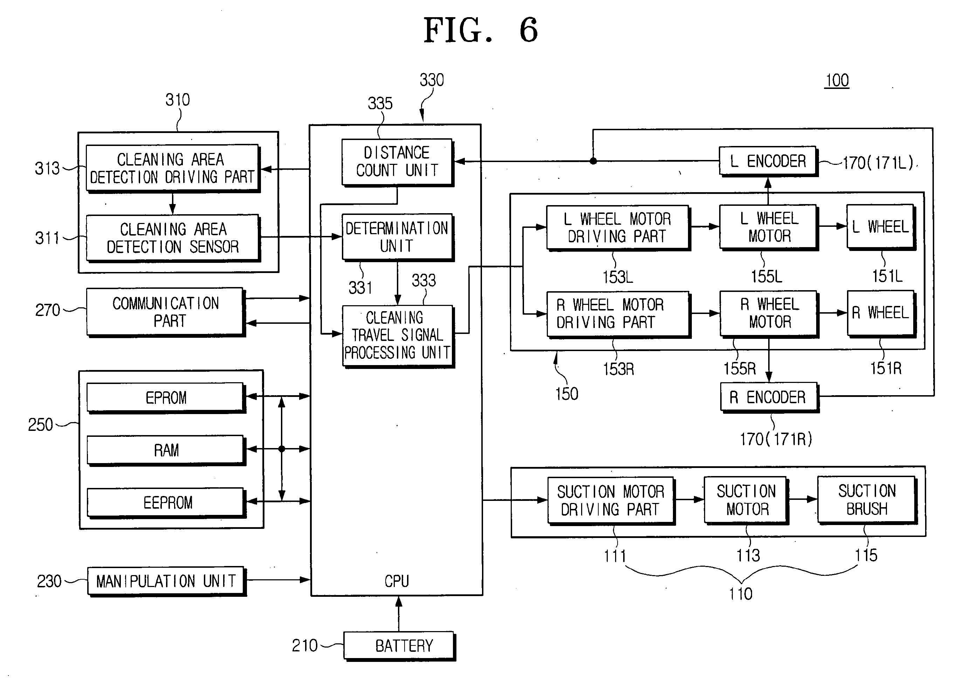

The central processing unit 330 controls the general operation of the robot cleaner 100, and the battery 210 provides power and is charged by an exterior charging device. Additionally, the manipulation unit 230 (FIG. 6) is disposed in the body 101 and inputs a manipulation requirement of the robot cleaner to the central processing unit 330 according to the user's manipulation.

Referring to FIG. 6, the robot cleaner 100 comprises the cleaning unit 110, the cleaning area detecting unit 310, the driving unit 150, the travel distance detecting unit 170, the central processing unit 330, the battery 210, and the manipulation unit 230, and a memory 250 and a communication unit 270.

The cleaning unit 110 comprises a suction motor driving part 111 receiving a cleaning signal from the central processing unit 330 to drive the suction motor 113, and the suction brush 115 receiving the driving force of the suction motor 113 to be driven.

The cleaning area detecting unit 310 senses an obstacle, such as a wall in front of the robot cleaner 100, and inputs the information to the central processing unit 330. The unit 310 comprises a cleaning area detecting driving part 313 that receives a signal from the central processing unit 330 to drive the cleaning area detecting sensor 311. The cleaning area detecting sensor 311 may initially travel along a wall to sense the cleaning area, or may sense an obstacle to detect the cleaning area. The cleaning area detecting sensor 311 may be, for example, a light sensor, an infrared ray sensor, or a bump sensor.

The driving unit 150 comprises the left wheel motor driving part 153L and the right wheel motor driving part 153R that receive travel signals from the central processing unit 330 and output driving signals to the left wheel motor 155L and the right wheel motor 155R to drive the left wheel 151L and the right wheel 151R.

The travel distance detecting unit 170 sends a travel distance of the robot cleaner 100 to the central processing unit 330, and comprises the left wheel encoder 171L and the right wheel encoder 171R for determining the number of rotations of the left wheel motor 155L and the right wheel motor 155R.

The central processing unit 330 controls the general cleaning operation of the robot cleaner 100, and comprises a determination unit 331 determining a cleaning area by the cleaning area detecting unit 310, and a cleaning travel signal processing unit 333 calculating a cleaning travel pattern of the robot cleaner 100 based on the information of the determination unit 331 and outputting a cleaning travel pattern signal to the driving unit 150. The cleaning travel pattern may be spiral, and preferably rectangular-spiral, to more efficiently cover a cleaning area. The central processing unit 330 further comprises a distance count unit 335 calculating a travel distance based on the number of rotations of the left wheel motor 155L and the right wheel motor 155R transmitted via the left wheel encoder 171 L and the right wheel encoder 171 R.

The manipulation unit 230 controls each operation of the robot cleaner 100 and comprises various manipulation switches. The memory 250 is built-in or removable to control the entire operation of the robot cleaner 100, and includes EPROM (erasable programmable read-only memory), EEPROM (electrically erasable programmable read-only memory) and RAM (random access memory). The communication unit 270 emits data in the robot cleaner 100, or transmits received exterior data to the central processing unit 330.

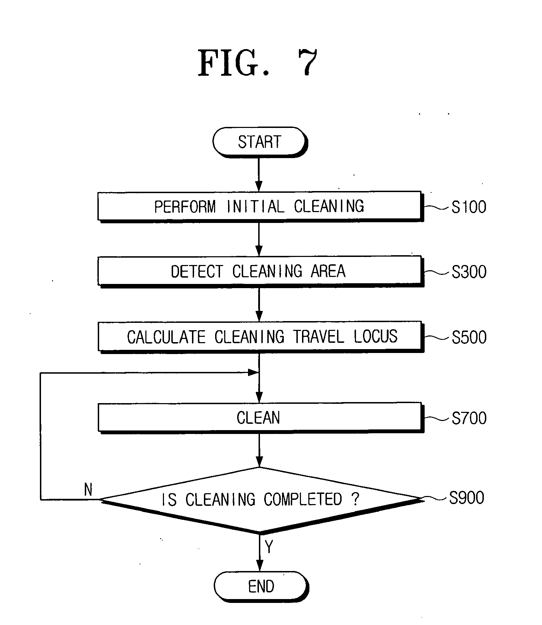

Referring to FIGS. 6 and 7, the robot cleaner 100 first performs an initial cleaning at step S100.

In operation, the central processing unit 330 sends a driving signal to the cleaning unit 110 and simultaneously sends a driving signal to the driving unit 150 upon receipt of a cleaning start signal from the manipulation unit 230. When the driving signal is sent from the central processing unit 330 to the suction motor driving part 111, the suction motor driving part 111 drives the suction motor 113 to operate the suction brush 115. Dust or debris of the cleaning surface are drawn in via the suction brush 115 and moved into the dust chamber of the cleaner. Concurrently, when the driving signal from the central processing unit 330 is sent to the left wheel motor driving part 153L or the right wheel motor driving part 153R, the left wheel motor 155L or the right wheel motor 155R is driven to move the left wheel 151L or the right wheel 151R along the cleaning travel pattern such that the certain cleaning is performed.

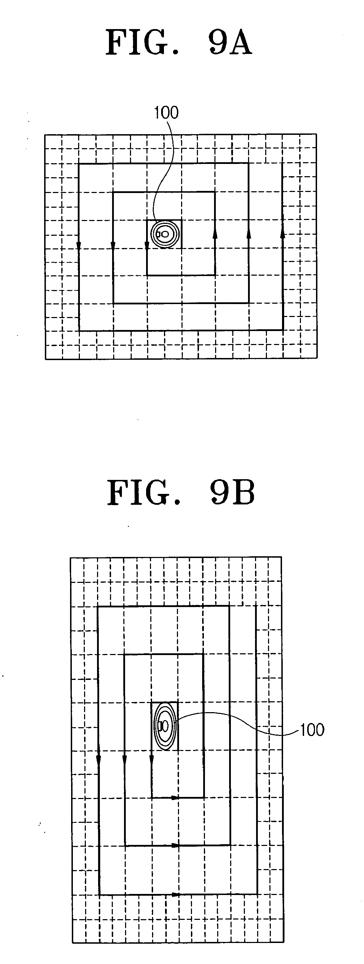

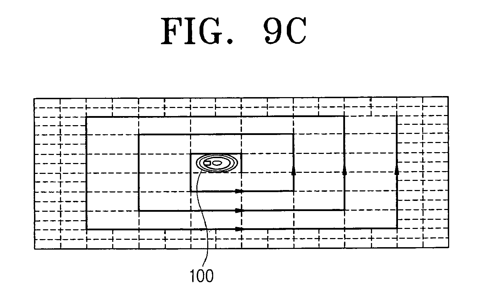

As described above, the central processing unit 330 sends the cleaning area detection signal to the cleaning area detection driving part 313 and operates the cleaning area detecting sensor 311 to detect the cleaning area while cleaning at step S300. When the detecting signal is sent to the central processing unit 330 via the cleaning area detecting sensor 311, the determination unit 331 of the central processing unit 330 determines the shape of the cleaning area, and the cleaning travel signal processing unit 333 calculates a cleaning travel pattern corresponding to the shape and sends a cleaning travel signal to the driving unit 150 at step S500. The cleaning travel pattern is preferably a rectangular-spiral pattern 901, as seen in FIG. 9B, and may be oblong-spiral or square-spiral pattern, as seen in FIGS. 9A and 9C, respectively.

The driving unit 150 having received the signal from the cleaning travel signal processing unit 333 travels along a cleaning travel pattern and correspondingly to the shape of the cleaning area to perform the cleaning at step S700. If the cleaning is completed at step S700, then the cleaning operation is terminated at step S900. If the cleaning is not complete, step S700 is repeated.

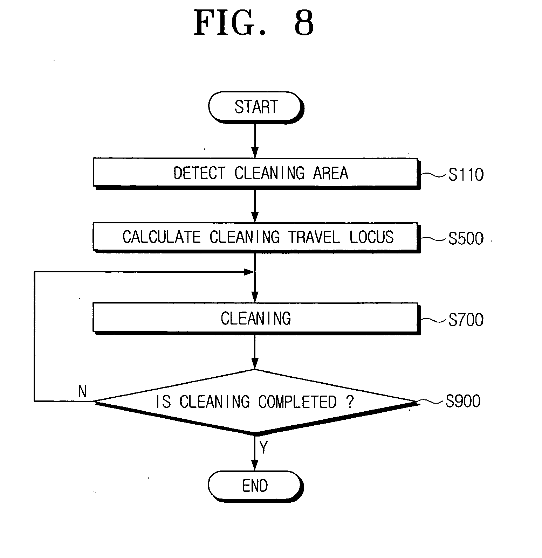

FIG. 8 is a view of a control method of a robot cleaner according to another embodiment of the present invention. Referring to FIG. 8, detecting the cleaning area is performed prior to the start of cleaning. In other words, the cleaning area is detected while cleaning according to the method of FIG. 7, except that the cleaning area is detected at step S110 before starting the cleaning at step S100. Accordingly, the same reference numerals are used for the same processes with FIG. 7, and the detailed description thereof will be omitted.

Additional advantages, objects, and features of the embodiments of the invention will be set forth in part in the description which follows and in part will become apparent to those having ordinary skill in the art upon examination of the following, or may be learned from practice of the invention. The objects and advantages of the embodiments of the invention may be realized and attained as particularly pointed out in the appended claims.

## Claims

1. A robot vacuum cleaner, comprising:
a driving unit moving a body on a cleaning surface;
a cleaning area detecting unit detecting an area of the cleaning surface; and
a central processing unit calculating a spiral cleaning travel pattern corresponding to a shape of the cleaning area based on information from the cleaning area detecting unit and sending a cleaning travel signal to the driving unit.

2. The robot vacuum cleaner according to claim 1, wherein the cleaning travel pattern comprises a rectangular-spiral pattern.

3. The robot vacuum cleaner according to any of claims 1 and 2, wherein the central processing unit comprises:
a determination unit that receives a detecting signal from the cleaning area detecting unit to determine the shape of the cleaning area; and
a cleaning travel signal processing unit calculating the cleaning travel pattern corresponding the cleaning area determined by the determination unit to send a cleaning travel signal corresponding to the cleaning travel pattern to the driving unit.

4. The robot vacuum cleaner according to any of claims 1 to 3, wherein the cleaning travel pattern comprises an oblong-spiral pattern or a square-spiral pattern.

5. The robot vacuum cleaner according to any of claims 1 to 4, wherein the cleaning area detecting unit includes a detecting sensor.

6. A method of controlling a robot vacuum cleaner comprising the steps of:
detecting a cleaning area;
calculating a spiral cleaning travel pattern corresponding to the detected cleaning area; and
outputting a signal based on the calculated cleaning travel pattern to perform cleaning following the pattern.

7. The method according to claim 6, wherein the cleaning travel pattern comprises a rectangular-spiral pattern.

8. The method according to any of claims 6 and 7, wherein the cleaning travel pattern comprises an oblong-spiral pattern or a square-spiral pattern.

9. The method according to any of claims 6 to 8, further comprising the step of performing an initial cleaning before detecting the cleaning area.

10. The method according to any of claims 6 to 9, further comprising the steps of determining a shape of the cleaning area and calculating the spiral cleaning travel pattern corresponding to the shape of the cleaning area.
